# EUROPEAN PATENT SPECIFICATION

(11) **EP 0 550 233 B1**
(45) Date of publication and mention of the grant of the patent: **27.12.1996**
(21) Application number: 92311657.8
(22) Date of filing: 21.12.1992
(51) Int. Cl.: H04N 1/00

(54) **Document handler platen transport**
Plattentransport in einer Dokumentenzuführungseinrichtung
Transport de plateau dans un manipulateur de documents

(30) Priority: 30.12.1991 US 814521
(43) Date of publication of application: 07.07.1993
(73) Proprietor: XEROX CORPORATION, Rochester New York 14644 (US)
(72) Inventor: Buddendeck, Mark H., Macedon, New York 14502 (US); Zastrow, Kelly J., Mendon, New York 14506 (US); Curry, Gerald R., Lima, New York 14485 (US)
(74) Representative: Johnson, Reginald George

(56) References cited:
- EP-A- 0 198 371
- GB-A- 2 040 887
- US-A- 4 190 185
- US-A- 4 314 696

## Description

This invention relates generally to a document handling system for delivering successive documents to an imaging station of an image input terminal.

In a typical document handler of the type often used with image input terminals such as those used for providing electronic digital images (e.g., raster input scanners) or those incorporating light-lens optical imaging systems a document is transported from a document input station to an imaging station.

The transport of the document from the document input station to the imaging station generally is accomplished by a series of belts and/or rollers which engage the document to move it along a predetermined path in a registered fashion. The registered document is then delivered to a friction belt which moves the document over the imaging station surface (the platen) to an imaging position.

When using a properly adjusted image input terminal to image documents on a platen, optimum results are provided when the document is presented parallel to the platen, and, generally, flush against the platen. Thus, any rippling of the document and any portions of the document outside the normal scanning range result in a poor image.

This problem has become even more severe as optical imaging systems and even electronic imagers are using systems which have a relatively short conjugate length. Such systems enhance imaging quality and are smaller but lack the "forgiveness "of a longer conjugate length input system. Thus, the areas, where these problems exhibit themselves most often, are the portions of the documents away from the center of the imaging area of the platen, because as the distance from the center of the imaging area increases, the shorter conjugate length of the imaging systems cannot compensate if the document is lifted off the platen. Thus, even slight rippling or lifting of the document in the margin areas of the image input system results in a faulty input image received by the imaging system.

The use of friction belts to transport documents across the platen presents several competing constraints. First, the belt and document must have a high degree of adherence, compared to that between the document and the platen and between the belt and the platen. Further, the wear on the materials of the belt, documents, and the platen should be minimized. It is also desirable to reduce the load on the motors which drive the belt, so that less powerful motors can be used to further reduce costs and/or maintenance time.

As seen above, proper registration of the document on the platen is imperative in the vertical direction. Proper registration of the document in the horizontal plane is also critical, as failure to maintain the registration of the sheet-like material, as it moves with the belt, generally results in a faulty image due to portions in non-imageable areas, skewed orientation, and the like. Thus, the friction between the belt and paper must be greater than the friction between the paper and the platen and between the belt and the platen. These constraints exist because the sheet-like material must not stick, slip, hesitate or otherwise buckle as it moves on the belt across the platen. Otherwise, documents would frequently be presented in a non-registered condition at the imaging station.

The mechanical pressure members most often used to bear upon friction belts are elongated rollers which bear on the friction belt. Unfortunately, these rollers often cause several undesirable effects. First, they tend to be separated by a distance so that wavy, out of focus lines occur too frequently on copies produced from the image recorded by the image input terminal. These roller members also tend to bear relatively heavily on the portion of the platen over which they are positioned causing wear of the platen. This is unacceptable, since platens are often optically coated to achieve imaging performance or coated with a transparent film to reduce paper drag, and it also is wasteful, even for non-coated platens, because it reduces the useful life of the platen. In addition, the quality of the images produced decreases with time. Further, the area of the belt opposite the platen and at the extreme ends of the rollers often build up dirt which results in darkening of copies produced thereby.

Various techniques have heretofore been used to provide a pressuring load on a friction belt in a document handler, as illustrated by the following disclosures:
US-A-3,988,019
Patentee: Achelpohl
Issued: October 26, 1976
US-A-4,669,721
Patentee: Westover
Issued: June 2, 1987
US-A-4,190,185
Patentee: Thate
Issued: February 26, 1980
US-A-3,937,454
Patentee: Colwill
Issued: February 10, 1976
Publication: Xerox Disclosure Journal
Author: Thomas W. Taylor, et al.
Issue: Vol. 7, No. 6, Nov./Dec. 1982

The disclosures of the foregoing patents may be briefly summarized as follows:

US-A-3,988,019 discloses an apparatus for depositing flat flexible articles on one double belt conveyor to another double belt conveyor by two ski like members.

US-A-4,669,721 discloses a sheet transporting apparatus which has a belt and a flexible elongated guide between which sheets pass. The flexible guide bears upon the sheet to maintain it proximate the belt.

US-A-4,190,185 discloses a first and second conveyor belt for transporting sheet material. The central portion of the sheet material is intended to be unsupported and not in contact with the belt. Engagement elements engage the edges of the sheet to tension it and urge it into a planar flattened condition.

US-A-3,937,454 discloses a document recirculator for feeding documents over a platen. The belt is maintained in close proximity to the platen for moving documents by a fixed plate over the belt and an inflatable bladder positioned between the plate and the belt.

Volume 7, No. 6, of the Xerox Disclosure Journal discloses a ski-like member which is mounted to a scuffer wheel to effect registration of a document. The scuffer wheel is so mounted to the ski-member that buckling of the document reduces the force applied by the scuffer wheel to the document.

EP-A-0,198,371 discloses an imaging or processing station having a glass platen under which a scanning device is located and a pivotably mounted transport device which covers the platen. The transport device has a conveyor belt around a driving roller and a guide roller which draws a recording medium into the imaging position. The platen has a registration step on the inlet side, so that when the recording medium is drawn onto the platen, the transport device is reversed to back the trailing edge of the recording medium against the registration step to align it. A pressure plate slidingly contacts the belt to assure secure contact between the belt and the recording medium. After imaging, the recording medium is moved off the platen in the same direction it was fed in.

GB-A-2,040,887 discloses an automatic document handler having a tray for supporting documents to be copied for supplying to and removing documents from the platen of a copying machine includes a register against which the document trailing edge is abutted through reversal of a platen transport. The platen transport comprises an endless belt conveyor supported above the platen, which normal sag in the belt or its catenary allowing the belt to contact the platen to provide the driving force for moving a document across the platen. An anti-skewing pair of roller devices are provided to force the belt down against a document and platen to provide a greater force between the belt and the platen to assure positive driving of the document over the register for return of the document to the tray.

In one aspect of the prevent invention, there is provided a document handling system having a belt transport system for delivering successive documents to a platen of an imaging station for an image input terminal or copier, comprising a driven belt which rotates about parallel drive rollers rotatably mounted in substantially parallel sides of a transport frame, the driven belt being positioned above and in contact with the platen, so that documents may be transported onto and over the platen by the driven belt to a location for imaging and then transported off the platen, and means for urging the driven belt into planar orientation over the platen to smooth the documents on the driven belt, characterized in that: at least one pair of elongated, substantially planar, ski-like members is disposed within and bear upon the driven belt, each ski-like member extending between the entrance to and the exit from the platen and being adjacent and substantially parallel to opposite sides of the transport frame; a central planar ski-like member is disposed within the driven belt and between the at least one pair of elongated ski-like members, the central ski-like member being substantially parallel to the driven belt; and the ski-like members are mounted by means enabling movement of the ski-like members up and down relative to the driven belt and transport frame, so that the force of gravity urges the ski-like members against the driven belt and in a direction towards the platen.

One embodiment of the invention comprises a friction belt for moving documents across a platen along a document path. The friction belt is driven and engages a document as it is passed in a registered condition to the belt's input end from the document handling input. The belt is urged toward the platen by pressure members. The pressure members include slider plates which bear upon the belt to urge it into close planar proximity with the platen so that documents transported thereby are presented to the imaging station in a registered planar condition flush against the platen. The slider plates are long and relatively thin members which extend between edges of the platen. A first set of elongated rollers is disposed at the entry and exit edges of the document imaging areas.

The document handling system may comprise a further slider plate having first and second portions which are relatively shorter but wider than the previously mentioned slider plates, between which the further slider plate is disposed. The trailing edge of one portion and the leading edge of the other are placed in close proximity to the edge of the platen.

In accordance with another aspect of the invention, there is provided a system employing a plurality of gravity loaded slider plates for loading and tensioning a friction belt for transporting documents over a platen to an imaging station of an imaging input terminal. The slider plates urge and maintain the belt in substantially planar orientation proximate to the platen of the printer. One set of the slider plates is oriented to bear on the belt over opposed margins of the imaging portion of the platen surface in a first direction along a predetermined document path. Another slider plate is disposed between that set of slider plates and extends substantially from one edge of the platen to the other. The slider plates may have a ski-shaped cross section.

By way of example only, embodiments of the invention will be described with reference to the accompanying drawings, in which:
Fig. 1 is a schematic side view of a copier having a recirculating, plural mode document handler;
Fig. 2 is a view of the document handler of Fig. 1, taken from the platen of Fig. 1 as shown by view line F₂-F₂ with portions removed for clarity;
Fig. 3 is a view similar to Fig. 2 of an alternative document handler;
Fig. 4 is a view similar to Figs. 2 and 3 but showing part only of yet another document handler;
Figs. 5 and 6 are, respectively, a side view and a cross-sectional view showing a mounting arrangement employed in the document handlers of Figs. 2 to 4, and
Fig. 7 is a view similar to Figs. 2 and 3 of another document handler.

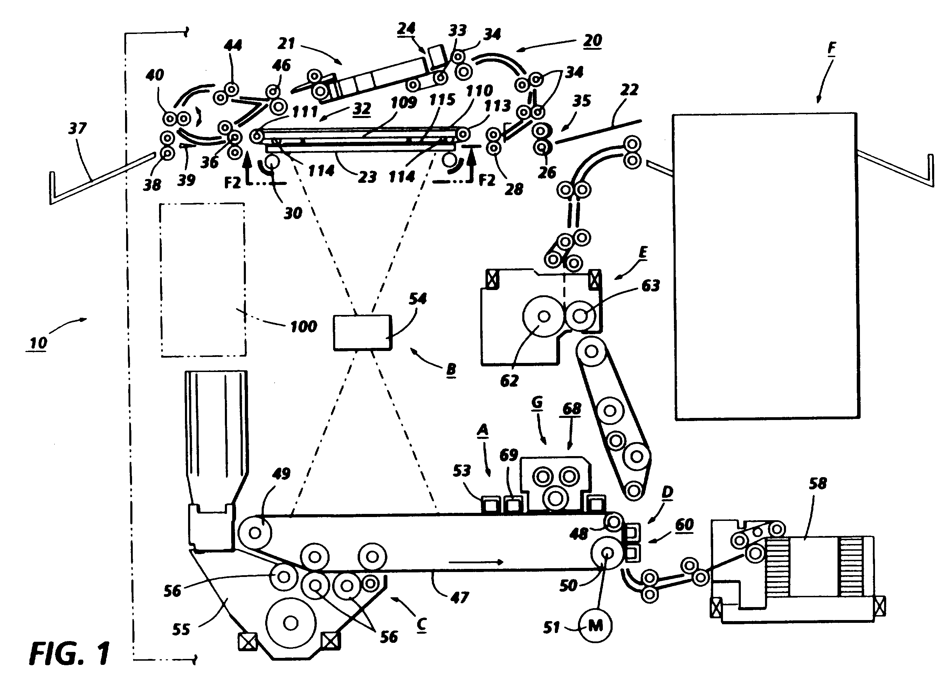

Fig. 1 shows a copier 10 with document handling system 20 having a recirculatory input stacking tray 21 and a side entrance shelf 22 for a semiautomatic document system into which documents may be individually inserted.

The recirculating document handler 24 (RDH) of the document handling system 20 provides for automatically transporting individual registered and spaced document sheets onto and over a conventional platen imaging station 23 of the copier 10, using a friction belt platen transport system 32 overlaying the platen 23. In this example, documents are fed one at a time from the bottom of a stack placed in the tray 21 by driven belt 33 to roller sets 34 which direct documents to driven rollers 28 and then to the friction belt transport system 32 for imaging.

Documents input from the semi-automatic input are fed from shelf 22 through rollers 35 to the rollers 28.

Documents exiting the platen transport system 32 are then directed to the lower two of three rollers 36. Documents fed from the semi-automatic shelf 22 are directed to output tray 37 via decision gate 39 and rollers 38.

Documents input from the tray 21 are directed by gate 39 to rollers 40 which can rotate in a first direction to receive documents from rollers 36 and then either continue rotating to direct the, documents to rollers 44 or reverse rotation to redirect the document to pass between the upper two rollers of roller set 36. Documents passing through the upper two rollers of roller set 36 and those passing through the rollers 44 are directed back to tray 21 via roller sets 46. As apparent, the described arrangement of rollers provides for both simplex and duplex imaging of documents placed in tray 21.

As is conventionally practiced, the entire document handler system 20 is pivotally mounted to copier 10 so as to be liftable by the operator away from its active position adjacent the platen. Lifting the document handler away from the platen permits manual document placement on the platen, as well as convenient clearance of jams occurring in the transport system proximate to the platen. The document handler system has external covers to cover the moving parts, which are not shown here for clarity.

The exemplary copier 10 of Figure 1 includes a conventional photoreceptor belt 47 having a photoconductive surface on a conductive substrate and conventional xerographic stations acting thereon: charging station A, exposure station B, development station C, transfer station D, fusing station E, finish station F, and cleaning station G. The belt 47 travels about stripper roller 48, tension roller 49 and drive roller 50 which is actuated by motor 51.

The copier functions in the manner now described. The photoreceptive belt 47 is charged at station A, by a corona generating device 53. The belt 47 then passes to imaging/exposure station B, where in the exemplary copier shown, a document on platen 23 is imaged and exposed on the belt 47 by a light-lens optical input/output system 54 to form a latent image on the belt 47.

The belt 47 with the latent image thereon then passes to the developer station C where toner is delivered to the surface of the belt to develop the latent image. In this case, the developer station is a housing 55 with magnetic brushes 56 whereby toner, triboelectrically bound to carrier beads, passes from the magnetic brushes 56 and the carrier beads, to the surface of the belt 47 to develop the latent image. The belt 47 then passes to the transfer station D.

At transfer station D, a copy sheet taken from the copy tray 58 is delivered for transfer of developed image thereto. The image is transferred from the belt 47 to the copy sheet due to the higher magnitude charge on the paper due to charging elements 60. The copy sheet with the transferred image is then passed to the fusing station E, where it passes between rollers 62 and 63. In this example, roller 63 is heated to permanently bond the transferred toner image to the copy sheet. The copy is then passed to the finishing station F for any further processing of the copy sheet, such as compiling with other copy sheets and/or binding, stapling and the like. The belt 47, after passing the transfer station D then passes to cleaning station G which is a brush cleaner unit 68. The belt is then discharged by source 69 to prepare for another cycle beginning in the charging station A.

Conventionally, the control of all placement feeding is by control unit 100, which is often a programmable microprocessor. A control unit of this type generally controls all functions of document handler system 20. The art readily teaches one to provide for a means and method to store and compare document and copy counts to recognize jam signals, to implement time delays and the like through the control unit 100. Further, the control unit also controls all of the imaging and printing functions and steps of copier 10.

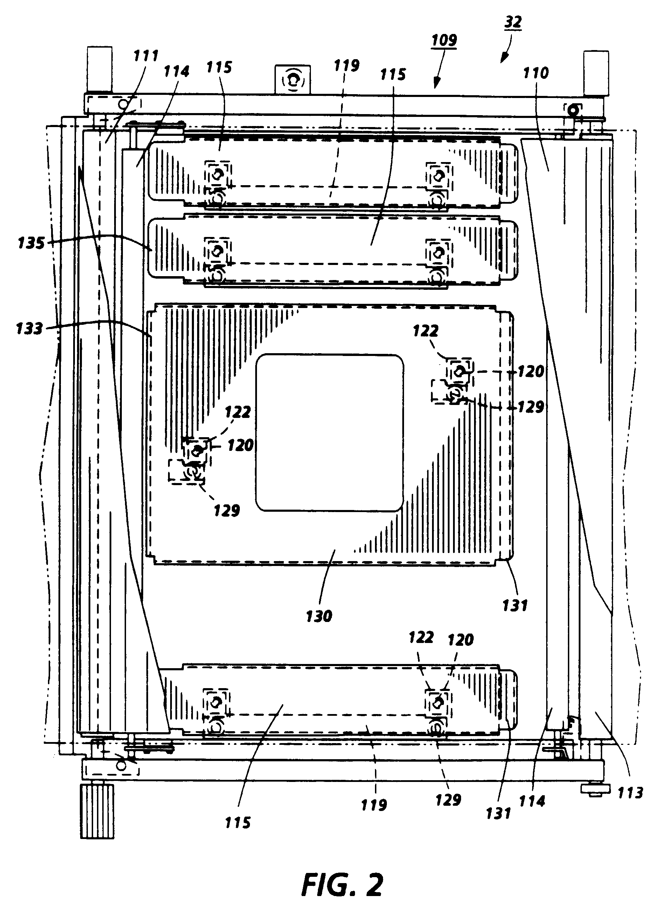

As shown more clearly in Fig. 2, a transport frame 109 supports the friction belt 110 of the transport systems 32. In Fig. 2 the belt 110 is broken away for clarity. The belt 110 rotates about a drive roller 111 and a tension roller 113. Elongated rollers 114 rotatably supported by the frame 109 are disposed above the entry and exit edges of the platen 23. The rollers bear upon the belt 110. Elongated planar members or skis 115 are disposed above the front and rear portions of the platen and extend substantially between the elongated rollers 114.

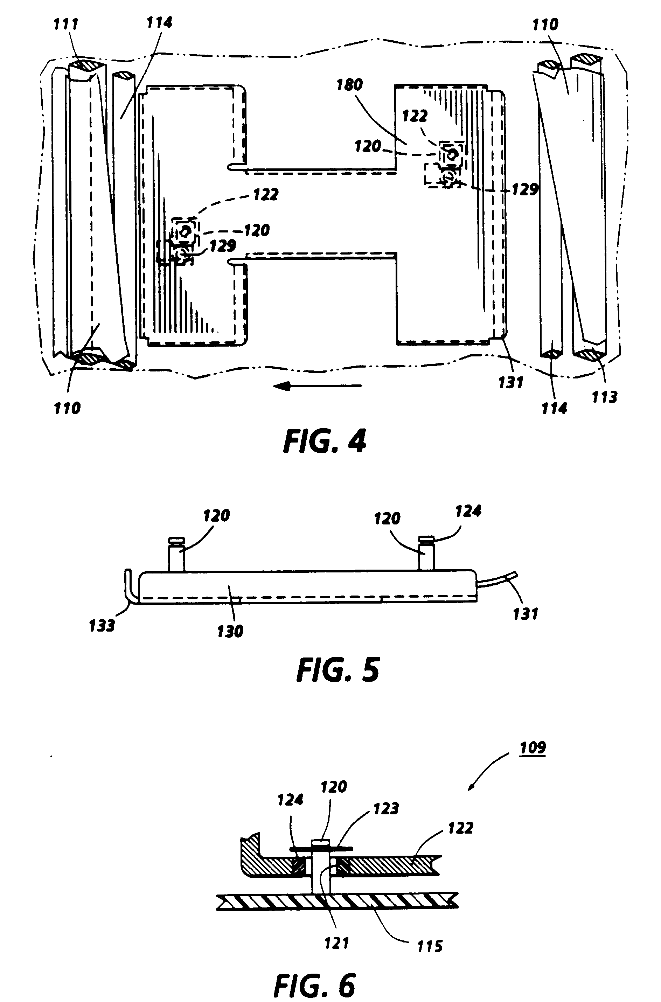

The skis 115 have upwardly extending fingers 120 which extend through apertures 121 in brackets 122 of the frame 109 (see Fig. 6). A clip 123 engages a grooved portion of the fingers 120 to retain each of the fingers 120 in its associated aperture. Bearing members 124 are disposed along the walls of the apertures 121 to permit free movement of the fingers 120 in the apertures 121 along the longitudinal axis of the fingers 120. The apertures 121 and the bearing members 124, preferable formed of resilient, flexible member such as nylon, are oversized relative to the fingers 120 so that the fingers 120 are freely slidable in the associated aperture 121 and are also capable of slight lateral or rotational movement. Thus the skis 115, when the document handler is in the active position, bear on the belt 110 and urge it toward the platen. The skis 115 due to the mounting of the fingers 120 may move up and down depending on the normal force transmitted from the belt Further, the mounting also permits some movement of the skis 115 in the plane parallel to the platen. These movement freedoms are similar for all similarly mounted bodies hereinafter discussed. The brackets 122 are secured to the frame 109 by nuts 129 (Fig.2). It will also be noted from Fig. 2 that the brackets 122 supporting each of the skis 115 are interconnected by an elongated portion 119.

Between the skis 115 is disposed a wide planar member or ski 130 which extends across the platen 23 and is supported in substantially the same fashion as skis 115 with brackets 122 and finger 120 extending through apertures 121 (see Fig. 5). Both the skis 115 and the wide ski 130 have upwardly extending portions 131 positioned toward the document entry portion of the platen 23. To further reduce wear on the platen 23, the exit tips 133 and 135 of the skis 115 and 130 can be curled slightly, similarly or even more severely than the entry portions 131 which in this case have a curve of 4.3 mm per 12 mm. Fig. 5, for example, shows a curled exit tip 133 on the wide ski 130. In document handlers having a dual directional feeding, skis having lips at both edges may be advantageous.

In this embodiment the skis 115 are pre-loaded in the active position by gravity. It will be appreciated that in certain situations and construction of skis 115, a spring or other device may be included to load the ski. For example, a coil spring disposed around finger 120 and between the bracket 122 and the ski 115 will load the ski toward the platen, whereas, placement of a coil spring on the finger 121 between the bracket 122 and retaining clip 123 will negatively load the ski 115.

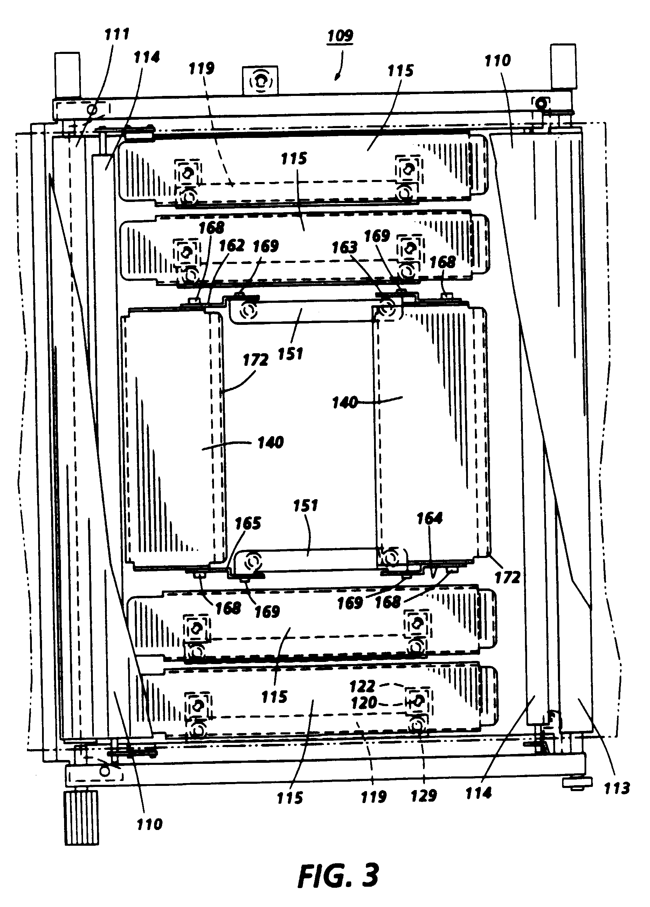

As shown in Fig. 3, an alternative embodiment of the present invention has a pair of wide skis 140 which are pivotally mounted to the frame 109, instead of the single wider ski 130. Specifically, the skis 140 are suspended by dual action, swivel connection members 162, 163, 164 and 165, which have apertures therein for receiving and retaining projecting portions 168 and 169 of the skis 140 and brackets 151, respectively. Each ski 140 is provided with an upward projecting portion 172 on the upstream side and may be provided with a similar portion on the downstream side. Due to the difference in the mounting from the skis 115, the movement freedoms are somewhat more limited, although by structuring and sizing the projecting portions 168 and 169 and the apertures of the swivel connection members 162, 163, 164 and 165 similar movement freedom can be obtained.

In Fig. 4, an H shaped central ski 180 is shown, which is similar in function and positioning to the ski 130 of Fig. 2 and the pair of skis 140 of Fig. 3.

The ski members 115,130, 140, 180 described above are adapted to provide a distribution of weight across the platen. The ski members are of a relatively light construction of between .06 and 1.5 mm (preferably 0.8 mm) thick low carbon steel. It will be understood that various coatings such as teflon or electrolytic coatings or, as preferred, a non-electrolytic nickel steel can be used to reduce friction between the belt and skis. The skis function to provide a belt surface by means of which the document to be imaged is maintained substantially parallel to the platen and in close proximity to it. Thus, the skis result in fewer copied images exhibiting out of focus portions and fewer copied images exhibiting wavy lines.

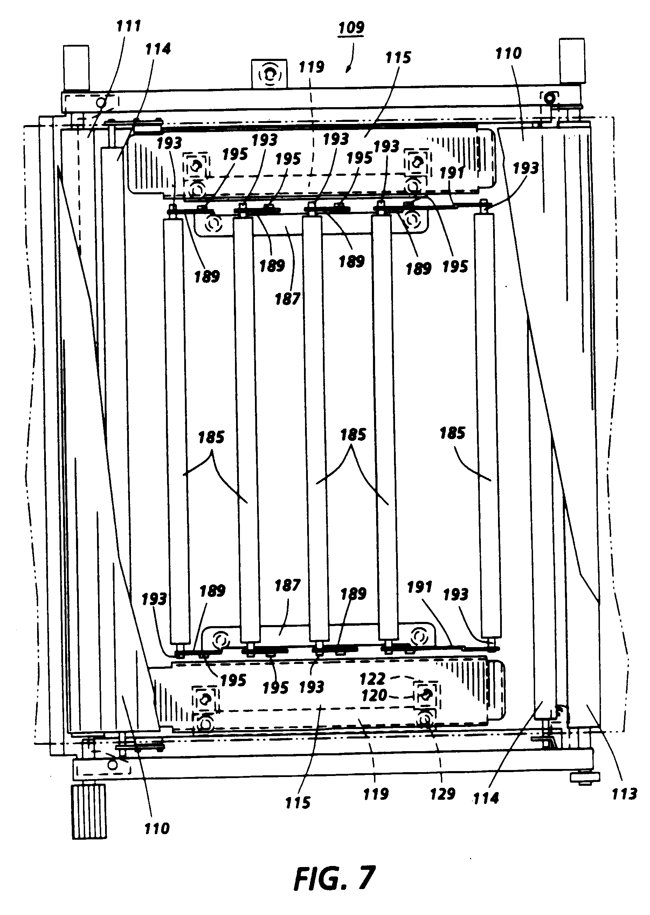

Fig. 7 shows an embodiment of the invention, which has central rollers 185 disposed between elongated skis 115. The skis 115 are mounted in substantially the same fashion as those of Fig. 2. The rollers 185 are supported by the frame 109. Brackets 187 are attached to the frame, and the rollers 185 are interconnected with the brackets 187 by swivel connections 189 and 191. The rollers 185 have a center axle 193 about which they rotate and upon which the rollers 185 are supported from the connections 189 and 191. The brackets 187 have extended portions 195 upon which the connections 189 and 191 are supported.

In the document handlers described above, the skis provide a distributed force bearing upon friction belts particularly at the margin areas of the imaging platen. Thus, a flat or parallel orientation of documents on the imaging platen is encouraged. The equality of the weight distribution achieved through use of the skis reduces the overall wear on the belt. The relatively even weight distribution also encourages movement of the documents in a constant fashion without buckling, slippage, or other like problems. The shape of the skis and the manner in which they are mounted also act to compensate or lessen forces as needed to reduce excessive wear and erosion. The location of the thin elongated skis along opposed margins of the platen surface provides a smooth belt surface so that a smooth document is presented to the platen at those regions. Likewise, the use of the wide skis in the entry and exit margins of the platen also serve to present a document in a flush condition to the platen. These features substantially reduce buckling and out of focus imaging.

## Claims

1. A document handling system (20) having a belt transport system (32) for delivering successive documents to a platen (23) of an imaging station for an image input terminal or copier (10), comprising a driven belt (110) which rotates about parallel drive rollers (111, 113) rotatably mounted in substantially parallel sides of a transport frame (109), the driven belt being positioned above and in contact with the platen, so that documents may be transported onto and over the platen by the driven belt to a location for imaging and then transported off the platen, and means for urging the driven belt into planar orientation over the platen to smooth the documents on the driven belt, characterized in that:
at least one pair of elongated, substantially planar, ski-like members (115) is disposed within and bear upon the driven belt, each ski-like member extending between the entrance to and the exit from the platen (23) and being adjacent and substantially parallel to opposite sides of the transport frame;
a central planar ski-like member (130) is disposed within the driven belt and between the at least one pair of elongated ski-like members (115), the central ski-like member being substantially parallel to the driven belt; and
the ski-like members are mounted by means (120, 121, 122) enabling movement of the ski-like members up and down relative to the driven belt and transport frame, so that the force of gravity urges the ski-like members against the driven belt and in a direction towards the platen.

2. The document handling system as claimed in claim 1, wherein elongated rollers (114) are rotatably supported by the transport frame (109) and disposed within and bear upon the driven belt, the elongated rollers being located above both the entry and exit edges of the platen (23); and wherein the ski-like members reside between the elongated rollers and are substantially perpendicular thereto.

3. The document handling system as claimed in claims 1 or 2, wherein the central ski-like member extends substantially over a central area of the platen.

4. The document handling system as claimed in claims 1 or 2, wherein the central ski-like member further comprises first and second portions (140) interconnected by brackets (151) positioned to bear on the driven belt adjacent to the entry and exit edges of the platen.

5. The document handling system as claimed in any one of claims 1 to 3, wherein the central ski-like member is an H-shaped member (180).

6. The document handling system as claimed in any one of the preceding claims, in which each of the ski-like members have portions (131, 172) extending away from the driven belt adjacent the document entry edge of the platen.

7. The document handling system as claimed in any one of the preceding claims, wherein the central ski-like member (130, 140, 180) is replaced by a plurality of parallel elongated rollers (185) rotatably mounted in brackets (187) by swivel connections (189, 191), each of said elongated rollers (185) having a longitudinal axis substantially perpendicular to the direction driven belt travel, each of said rollers (185) substantially spanning the space between the at least one pair of ski-like members (115), and the brackets (187) being mounted to the transport frame.

## Patentansprüche

1. Dokumententransportsystem (20) mit einem Bandtransportsystem (32), das einer Auflageplatte (23) einer Abbildungsstation für eine Bildeingabeendstelle oder einen Kopierer (10) aufeinanderfolgende Dokumente zuführt, das ein angetriebenes Band (110) umfaßt, das sich um parallele Antriebsrollen (111, 113) dreht, die drehbar an im wesentlichen parallelen Seiten eines Transportgestells (109) angebracht sind, wobei das angetriebene Band über der Auflageplatte und in Kontakt mit ihr angeordnet ist, so daß Dokumente durch das angetriebene Band auf und über die Auflageplatte zu einer Stelle zum Abbilden transportiert und anschließend von der Auflageplatte heruntertransportiert werden können, sowie eine Einrichtung, die das angetriebene Band in plane Ausrichtung über die Auflageplatte drückt, um die Dokumente auf dem angetriebenen Band zu glätten, **dadurch gekennzeichnet,** daß:
wenigstens ein Paar länglicher, im wesentlichen planer, kufenartiger Elemente (115) in dem angetriebenen Band angeordnet ist und darauf drückt, wobei sich jedes kufenartige Element zwischen dem Eingang zu und dem Austritt von der Auflageplatte (23) erstreckt und an einander gegenüberliegende Seiten des Transportgestells angrenzt und im wesentlichen parallel dazu ist;
ein mittleres planes Kufenelement (130) in dem angetriebenen Band und zwischen dem wenigstens einen Paar länglicher Kufenelemente (115) angeordnet ist, wobei das mittlere Kufenelement im wesentlichen parallel zu dem angetriebenen Band ist; und
die kufenartigen Elemente mit Einrichtungen (120, 121, 122) angebracht sind, die Bewegung der kufenartigen Elemente nach oben und nach unten in bezug auf das angetriebene Band und das Transportgestell ermöglichen, so daß die Schwerkraft die kufenartigen Elemente an das angetriebene Band und in einer Richtung auf die Auflageplatte zu drückt.

2. Dokumententransportsystem nach Anspruch 1, wobei längliche Rollen (114) drehbar von dem Transportgestell (109) getragen werden und in dem angetriebenen Band angeordnet sind und darauf drücken, wobei die länglichen Rollen sowohl über dem Eintritts- als auch dem Austrittsrand der Auflageplatte (23) angeordnet sind, und wobei sich die kufenartigen Elemente zwischen den länglichen Rollen befinden und im wesentlichen senkrecht dazu sind.

3. Dokumententransportsystem nach Anspruch 1 oder 2, wobei sich das mittlere kufenartige Element im wesentlichen über einen mittleren Bereich der Auflageplatte erstreckt.

4. Dokumententransportsystem nach Anspruch 1 oder 2, wobei das mittlere kufenartige Element des weiteren einen ersten und einen zweiten Abschnitt (140) umfaßt, die durch Halterungen (151) miteinander verbunden sind, die so angeordnet sind, daß sie auf das angetriebene Band in der Nähe des Eintritts- und des Austrittsrandes der Auflageplatte drükken.

5. Dokumententransportsystem nach einem der Ansprüche 1 bis 3, wobei das mittlere kufenartige Element ein H-förmiges Element (180) ist.

6. Dokumententransportsystem nach einem der vorangehenden Ansprüche, wobei jedes der kufenartigen Elemente Abschnitte (131,172) aufweist, die sich von dem angetriebenen Band an den Dokumenteneintrittsrand der Auflageplatte angrenzend weg erstrecken.

7. Dokumententransportsystem nach einem der vorangehenden Ansprüche, wobei das mittlere kufenartige Element (130,140,180) durch eine Vielzahl von parallelen länglichen Rollen (185) ersetzt ist, die durch Schwenkverbindungen (189,191) drehbar in Halterungen (187) angebracht sind, wobei jede der länglichen Rollen (185) eine Längsachse im wesentlichen senkrecht zu der Laufrichtung des angetriebenen Bandes aufweist, wobei jede der Rollen (185) im wesentlichen den Zwischenraum zwischen dem wenigstens einen Paar kufenartiger Elemente (115) und den Halterungen (187), die an dem Transportgestell angebracht sind, überbrückt.

## Revendications

1. Système de manipulation de documents (20) comportant un système de transport à courroie (32) destiné à délivrer des documents successifs à un plateau (23) d'un poste de génération d'image d'un terminal d'entrée d'images ou d'un copieur (10), comprenant une courroie menée (110) qui tourne autour de rouleaux d'entraînement parallèles (111, 113), montés avec faculté de rotation dans des côtés sensiblement parallèles d'un cadre de transport (109), la courroie menée étant positionnée au-dessus du plateau et en contact avec celui-ci, de sorte que les documents peuvent être transportés jusque sur le plateau et en travers de celui-ci par la courroie menée jusqu'à un emplacement de génération d'image, puis être transportés hors du plateau, et des moyens destinés à pousser la courroie menée en disposition plane sur le plateau afin de lisser les documents présents sur la courroie menée, caractérisé en ce que :
au moins une paire d'éléments allongés, sensiblement plans, en forme de patin (115) est disposée à l'intérieur de la courroie menée et porte sur celle-ci, chaque élément en forme de patin s'étendant entre l'entrée et la sortie du plateau (23) et étant contigu et sensiblement parallèle à des bords opposés du cadre de transport,
un élément central plan en forme de patin (130) est disposé à l'intérieur de la courroie menée et entre la au moins une paire d'éléments allongés en forme de patin (115), l'élément central en forme de patin étant sensiblement parallèle à la courroie menée, et
les éléments en forme de patin sont montés à l'aide de moyens (120, 121, 122) permettant le déplacement vers le haut et vers le bas des éléments en forme de patin par rapport à la courroie menée et au cadre de transport, de sorte que la force de gravité pousse les éléments en forme de patin contre la courroie menée et en direction du plateau.

2. Système de manipulation de documents selon la revendication 1, dans lequel des rouleaux allongés (114) sont supportés avec faculté de rotation par le cadre de transport (109), et sont disposés à l'intérieur de la courroie menée et portent sur celle-ci, les rouleaux allongés étant situés au-dessus des deux bords d'entrée et de sortie du plateau (23), et dans lequel les éléments en forme de patin sont disposés entre les rouleaux allongés et sont sensiblement perpendiculaires à ceux-ci.

3. Système de manipulation de documents selon la revendication 1 ou 2, dans lequel l'élément central en forme de patin s'étend sensiblement au-dessus d'une zone centrale du plateau.

4. Système de manipulation de documents selon la revendication 1 ou 2, dans lequel l'élément central en forme de patin comprend en outre des première et seconde parties (140), reliées par des supports (151), positionnées de façon à porter sur la courroie menée à proximité des bords d'entrée et de sortie du plateau.

5. Système de manipulation de documents selon l'une quelconque des revendications 1 à 3, dans lequel l'élément central en forme de patin est un élément en forme de H (180).

6. Système de manipulation de documents selon l'une quelconque des revendications précédentes, dans lequel chacun des éléments en forme de patin comporte des parties (131, 172) s'étendant à l'écart de la courroie menée à proximité du bord d'entrée de documents du plateau.

7. Système de manipulation de documents selon l'une quelconque des revendications précédentes, dans lequel l'élément central en forme de patin (130, 140, 180) est remplacé par une pluralité de rouleaux parallèles allongés (185) montés avec faculté de rotation dans des supports (187) à l'aide de liaisons à pivot (189, 191), chacun desdits rouleaux allongés (185) ayant un axe longitudinal sensiblement perpendiculaire au sens de déplacement de la courroie menée, chacun desdits rouleaux (185) comblant sensiblement l'espace entre la au moins une paire d'éléments en forme de patin (115), et les supports (187) étant montés sur le cadre de transport.
